(19)

Europäisches
Patentamt
European
Patent Office
Office européen
des brevets

(11) **EP 2 462 479 B1**

(12) **EUROPEAN PATENT SPECIFICATION**

(45) Date of publication and mention
of the grant of the patent:
**31.10.2018 Bulletin 2018/44**

(21) Application number: **10807208.3**

(22) Date of filing: **06.08.2010**

(51) Int Cl.:
***G02F 1/17*** *(2006.01)*

(86) International application number:
**PCT/US2010/044650**

(87) International publication number:
**WO 2011/017588 (10.02.2011 Gazette 2011/06)**

(54) **ENERGY EFFICIENT FENESTRATION PRODUCT WITH SUSPENDED PARTICLE DEVICE**

STROMSPARENDES FENSTERUNGSPRODUKT MIT EINER HÄNGENDEN PARTIKELVORRICHTUNG

PRODUIT DE FENÊTRAGE ÉCONOME EN ÉNERGIE DOTÉ D UN DISPOSITIF À PARTICULES EN SUSPENSION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.08.2009 US 232294 P**
**05.08.2010 US 851285**

(43) Date of publication of application:
**13.06.2012 Bulletin 2012/24**

(73) Proprietor: **RESEARCH FRONTIERS INCORPORATED**
**Woodbury**
**New York 11797 (US)**

(72) Inventors:
• **SLOVAK, Steven, M.**
**N. Massapequa**
**New York 11758 (US)**
• **WANG, Dongyan**
**Ithaca, New York 14850 (US)**
• **SAXE, Robert, L.**
**New York, New York 10075 (US)**
• **CHEN, Xiao-Ping**
**East Meadow**
**New York 11554 (US)**
• **HULL, William, J.**
**Bayside**
**New York 11361 (US)**

(74) Representative: **Walcher, Armin**
**Louis, Pöhlau, Lohrentz**
**Patentanwälte**
**Postfach 30 55**
**90014 Nürnberg (DE)**

(56) References cited:
**WO-A1-2007/122428      DE-A1- 10 043 141**
**US-B1- 6 429 961        US-B1- 6 493 128**
**US-B2- 7 361 252**

**Description**

**CROSS REFERENCE TO RELATED APPLICATIONS**

The present application claims priority to U.S. Provisional Patent Application Serial No. 61/232,294 filed August 7, 2009 entitled SPD FILMS AND SPD LIGHT VALVE LAMINATES USED ALONE OR AS PART OF INSULATING GLASS UNITS TO IMPROVE THE EFFICIENCY OF FENESTRATIONS and to U.S. Non-provisional Patent Application Serial No. 12/851,285, filed August 5, 2010, entitled ENERGY EFFICIENT FENESTRATION PRODUCT WITH SUSPENDED PARTICLE DEVICE.

**BACKGROUND**

Field of the Disclosure

The present disclosure is directed to films and laminations of films for use as or in light valves which include liquid particle suspensions, which light valves are generally referred to herein as suspended particle devices or SPD light valves, or simply as SPDs. More specifically, the present disclosure relates to a fenestration product including an insulated glass unit utilizing SPDs that provides energy efficiency.

Related Art

SPD light valves have been known for more than seventy years for use in the modulation of light. Such light valves have been proposed for use in numerous applications during that time including, e.g., alphanumeric displays and television displays; filters for lamps, cameras, displays and optical fibers; and windows, sunroofs, toys, sunvisors, eyeglasses, goggles, mirrors, light pipes and the like to control the amount of light passing therethrough or reflected therefrom as the case may be. Examples of windows include, without limitation, architectural windows for commercial buildings, greenhouses and residences, windows for automotive vehicles, boats, trains, planes and spacecraft, windows for doors including peepholes, and windows for appliances such as ovens and refrigerators including compartments thereof. Light valves of the type described herein are also known, as indicated above, as suspended particle devices or SPDs.

As used herein, the term "light valve" describes a cell formed of two walls that are spaced apart by a small distance, with at least one wall being transparent. The walls have electrodes thereon, usually in the form of transparent, electrically conductive coatings. Optionally the electrodes on the walls may have thin transparent dielectric overcoatings thereon. The cell contains a light-modulating element (sometimes herein referred to as an activatable material) which may, without limitation, be either a liquid suspension of particles, or all or a portion of the entire element may comprise a plastic film in which droplets of a liquid suspension of particles are distributed.

The liquid suspension (sometimes herein referred to as a liquid light valve suspension or as a light valve suspension) comprises small particles suspended in a liquid suspending medium. In the absence of an applied electrical field, the particles in the liquid suspension assume random positions due to Brownian movement. Hence, a beam of light passing into the cell is reflected, transmitted or absorbed depending upon the cell structure, the nature and concentration of the particles and the energy content of the light. The light valve is thus relatively dark in the OFF state. However, when an electric field is applied through the liquid light valve suspension in the light valve, the particles become aligned and for many suspensions most of the light can pass through the cell. The light valve is thus relatively transparent in the ON state.

For many applications it is preferable for all or part of the activatable material, i.e., the light modulating element, to be a plastic film rather than a liquid suspension. For example, in a light valve used as a variable light transmission window, a plastic film in which droplets of liquid suspension are distributed is preferable to a liquid suspension alone because hydrostatic pressure effects, e.g., bulging associated with a high column of light suspension, can be avoided through use of a film and the risk of possible leakage can also be avoided. Another advantage of using a plastic film is that, in a plastic film, the particles are generally present only within very small droplets and, hence, do not noticeably agglomerate when the film is repeatedly activated with a voltage.

A light valve film (also sometimes herein referred to as an SPD film) as used herein means a film or sheet, or more than one thereof comprising a suspension of particles used or intended for use in an SPD light valve. Such light valve film usually comprises a discontinuous phase of a liquid comprising dispersed particles, such discontinuous phase being dispersed throughout a continuous phase enclosed within one or more rigid or flexible solid films or sheets. Cured emulsion, which may be part of a light valve film, is sometimes also referred to as a film or film layer. The light valve film may also comprise one or more additional layers such as, without limitation, a film, coating or sheet or combination thereof, which may provide the light valve film with one or more of, for example, (1) scratch resistance, (2) protection from ultraviolet radiation, (3) reflection of infrared energy, (4) electrical conductivity for transmitting an applied electric or magnetic field to the activatable material, (5) dielectric overcoatings (6) color tinting and (7) acoustic control.

A common (but non-limiting) construction for an SPD film has five layers, namely, from one side to the other: (1) a first sheet of polyethylene terephthalate ("PET") plastic, conveniently, but not limited to, 5-7 mils in thickness, (2) a very thin transparent, electrically conductive coating of indium tin oxide ("ITO"), acting or capable of acting as an electrode, on said first sheet of PET, (3) a layer of cured (i.e., cross-linked) SPD emulsion, usually 2-5 mils in thickness and, (4) a second ITO coating acting or capable of acting as an electrode on (5) a second PET plastic substrate. As stated previously, additional layers which provide other functions may optionally be added to the five-layer SPD film described above. Typically, copper foil, conductive fabric or the like are affixed to the electrodes so that they extend beyond the perimeter of the SPD film for convenient connection to a suitable voltage source. Furthermore the SPD film can be laminated, for example, with transparent hot melt adhesive films and/or glass or thicker transparent plastic sheets to provide strength and rigidity and to protect various parts of the combined unit from environmental stresses which may, otherwise, damage its performance characteristics. As with the SPD film above, the SPD laminate may also include one or more additional layers 1-7.

U.S. Patent No. 5,409,734 exemplifies a type of non-cross-linked light valve film that is made by phase separation from a homogeneous solution. Light valve films made by cross-linking (curing) of emulsions are also known. The methods of the present invention are preferably directed to the use of the latter type of film, i.e., film comprising a layer formed by cross-linking an emulsion, and to laminated films produced thereby. See, for example, U.S. Patent Nos. 5,463,491 and 5,463,492, and U.S. Patent Application Serial No. 10/898,303, all of which are assigned to the assignee of the present invention. Various types of SPD emulsions, and methods of curing same, are described in U.S. Patent Nos. 6,301,040, 6,416,827, and 6,900,923 B2, all of which are assigned to the assignee of the present invention. Such films and variations thereof may be cured through cross-linking brought about by exposing the emulsions to (1) ultraviolet radiation, (2) electron beams or (3) heat.

A variety of liquid light valve suspensions are well known in the art and such suspensions are readily formulated according to techniques well-known to one of ordinary skill therein. The term liquid light valve suspension, as noted above, when used herein means a liquid suspending medium in which a plurality of small particles are dispersed. The liquid suspending medium comprises one or more non-aqueous, electrically resistive liquids in which there is preferably dissolved at least one type of polymeric stabilizer which acts to reduce the tendency of the particles to agglomerate and to keep them dispersed and in suspension.

Liquid light valve suspensions useful in the present invention may include any of the so-called prior art liquid suspending media previously proposed for use in light valves for suspending the particles. Liquid suspending media known in the art which are useful herein include, but are not limited to, the liquid suspending media disclosed in U.S. Patent Nos. 4,247,175, 4,407,565, 4,772,103, 5,409,734, 5,461,506, 5,463,492, and 6,936,193 B2. In general one or both of the suspending medium or the polymeric stabilizer typically dissolved therein is chosen so as to maintain the suspended particles in gravitational equilibrium.

The polymeric stabilizer, when employed, can be a single type of solid polymer that bonds to the surface of the particles, but which also dissolves in the non-aqueous liquid(s) which comprise the liquid suspending medium. Alternatively, there may be two or more solid polymeric stabilizers serving as a polymeric stabilizer system. For example, the particles can be coated with a first type of solid polymeric stabilizer such as nitrocellulose which, in effect, when dissolved, provides a plain surface coating for the particles, together with one or more additional types of solid polymeric stabilizer that when dissolved, bond to or associate with the first type of solid polymeric stabilizer and also dissolve in the liquid suspending medium to provide dispersion and steric protection for the particles. Also, liquid polymeric stabilizers may be used to advantage, especially in SPD light valve films, as described for example in U.S. Patent No. 5,463,492.

Inorganic and organic particles may be used in a light valve suspension, and such particles may be either light absorbing or light reflecting in the visible portion of the electromagnetic spectrum.

Conventional SPD light valves have generally employed particles of colloidal size. As used herein the term colloidal means that the particles generally have a largest dimension averaging 1 micron or less. Preferably, most polyhalide or non-polyhalide types of particles used or intended for use in an SPD light valve suspension will have a largest dimension which averages 0.3 micron or less and more preferably averages less than one-half of the wavelength of blue light, i.e., less than 2000 Angstroms, to keep light scatter extremely low.

SPD films may be used in fenestration products, such as windows and skylights. In this application, the SPD films are typically laminated between two pieces of either glass or plastic, together with one or more interlayers of either hot melt adhesive or cured monomer and/or other layers to reflect heat, block UV or for other purposes (the "laminate"). The interlayer material employed can be, but is not limited to, ethylene vinylacetate, polyvinylbutyral or polyurethane. Energy efficiency is a very important feature of fenestration products and thus it is beneficial to maximize energy efficiency.

According to the Efficient Windows Collaborative website (www.efficientwindows.org), a site developed jointly by the Center for Sustainable Building Research, the Alliance to Save Energy, and Lawrence Berkeley National Laboratory, fenestrations considered to be energy efficient must have a U-Factor (U-Value) <0.30 and a Solar Heat Gain Coefficient (SHGC) <0.30.

The U-Value, SHGC and Shading Coefficient (SC) are defined by efficientwindows.org as follows:

**U-factor (U-value).** A measure of the rate of non-solar heat loss or gain through a material or assembly. It is expressed in units of Btu/hr-sq ft-°F (W/sq m-°C). Values are normally given for NFRC/ASHRAE winter conditions of 0° F (-17.8 °C) outdoor temperature, 70° F (21° C) indoor temperature, 15 mph (6.7m/s) wind, and no solar load. The U-factor may be expressed for the glass alone or the entire window, which includes the effect of the frame and the spacer materials. The lower the U-factor, the greater a window's resistance to heat flow and the better its insulating value.

**Solar heat gain coefficient (SHGC).** The fraction of solar radiation admitted through a window or skylight, both directly transmitted, and absorbed and subsequently released inward. The solar heat gain coefficient has replaced the shading coefficient as the standard indicator of a window's shading ability. It is expressed as a number between 0 and 1. The lower a window's solar heat gain coefficient, the less solar heat it transmits, and the greater its shading ability. SHGC can be expressed in terms of the glass alone or can refer to the entire window assembly.

**Shading Coefficient (SC) -** The total amount of solar energy that passes through a glass relative to a 1/8" (3mm) thick clear glass under the same design conditions; included both solar energy transmitted directly plus any absorbed solar energy subsequently re-radiated or convected into a room; lower values indicate better performance in reducing summer heat gain and therefore air-conditioning loads.

The prior art, however, has not shown a fenestration product including an SPD film or SPD laminate that provides good energy efficiency.

Fenestration products including an SPD laminate are disclosed in WO2007122428 A1 and in US6429961 B1. The latter publication discloses all the features of the preamble of claim 1 in combination.

## SUMMARY

It is an object of the present disclosure to provide a fenestration product including an insulated glass unit including an SPD laminate that provides increased energy efficiency.

An insulated glass unit in accordance with the present invention is defined in claim 1.

A method of making an insulated glass unit in accordance with the present invention is defined in claim 2.

## BRIEF DESCRIPTION OF THE DRAWINGS

Fig. 1 illustrates a cross sectional view of a fenestration product in accordance with an embodiment of the present application.

Fig. 2 illustrates a cross sectional view of an exemplary SPD laminate used in the fenestration product of Fig. 1.

## DETAILED DESCRIPTION OF THE EMBODIMENTS

As noted above, in order for an SPD film to be used in a fenestration product, it is laminated to form an SPD laminate. The laminate is incorporated into the construction of an insulating glass unit ("IGU") wherein a gap including the inert gas argon is present between the laminate and one or more other components of the fenestration product. An IGU is defined as two or more sheets of glass separated by one or more Argon (Ar) space interlayers within a frame. Fenestration is defined as the design and placement of windows, doors and skylights in a building.

While the general structure of the IGU is described above, there are several different orientations that may be used in conjunction with SPD films or laminates. Tempered or heat rejecting glass is used in combination with the laminate. Further, the tempered or heat rejecting glass is may incorporated in the laminate itself. That is, the laminate is formed by an SPD film laminated between a tempered glass and a heat rejecting glass.

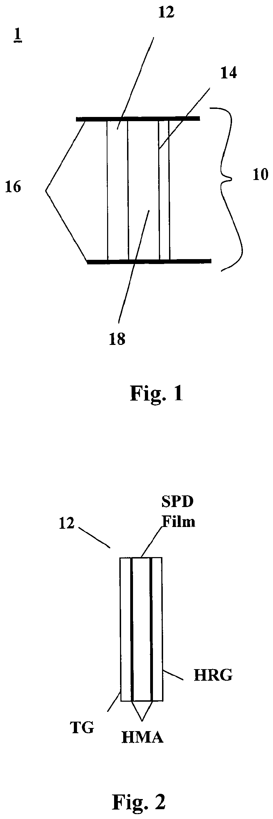

Fig. 1 illustrates an embodiment of a fenestration product 1 that includes an insulated glass unit (IGU) 10 in accordance with an embodiment of the present application. As illustrated, the IGU 10 includes an SPD laminate 12 mounted in a frame 16 on an outward facing side of the IGU 10. Outward refers to the side that will face outside in a window or other fenestration product. A pane of glass 14 is mounted in the frame 16 adjacent to the SPD laminate 12 with a gap 18 formed between the SPD laminate and the pane of glass. In a preferred embodiment, the glass 14 is heat rejecting glass (HRG), however, tempered glass TG may be used. The gap 18 has a width of between 0.2 and 1.0 inches and is preferably 0.5 inches and filled with argon. Acceptable energy efficiency, however, may be obtained using a pane of tempered glass TG as the glass 14, under certain conditions, for example, when heat resistant glass is utilized in the SPD laminate 12 itself. The SPD laminate 12 is positioned on the outward facing side of the fenestration product 1.

While not explicitly illustrated, the SPD laminate is electrically connected to a power source, as desired.

Fig. 2 illustrates an exemplary embodiment of the SPD laminate 12. As is explained below, the SPD laminate 12 includes a pane of tempered glass TG which is adhered to an SPD film via a first layer of adhesive, preferably a hot melt adhesive HMA, followed by a pane of heat rejecting glass HRG adhered to the SPD film by a second layer of the same adhesive HMA. Where at least one pane of heat rejecting glass is used in the SPD laminate 12, the glass 14 of the IGU 10 may be tempered glass. Indeed, as is explained below with respect to Table 4, it is preferable that the IGU 10 not include more than one pane of heat rejecting glass in total. The heat rejecting coating of the heat rejecting glass HRG faces away from the SPD film.

As noted above, current fenestration products that utilize SPDs or SPD laminates do not provide energy efficiency. Further, SPDs and SPD laminates in and of themselves typically do not provide the desired energy efficiency either. In addition, the use of tempered or heat rejecting glass alone will also not provide energy efficiency in a fenestration product. The IGU 10 described above and claimed herein, however, provides a fenestration with high energy efficiency, that is a U-Value <0.30 and SHGC <0.30.

Various configurations were tested and the assembly described above provided the desired energy efficiency.

SPD film and SPD laminates were prepared and sent along with other fenestration components to DSET Laboratories of Phoenix, AZ, a division of Atlas Material Testing Solutions for tests including U-Factor, Shading Coefficient and SHGC. The various configurations were tested with the SPD film and/or SPD laminates in the unpowered dark state and the fully powered light state.

The SPDs were tested alone, as well as, combined with other components of insulating glass units (IGUs) to measure the U-Value, % Total Solar Energy Rejected, Relative Heat Gain, Shading Coefficient and SHGC.

The SPD film used for testing was received from Hitachi Chemical Company and was laminated according to the method disclosed in U.S. Pat No. 7,361,252 B2. In one embodiment, the layup for the laminate was float glass/ethylene vinylacetate/SPD film/ethylene vinylacetate/float glass. The ethylene vinylacetate interlayer will be referred to as (HMA) for hot melt adhesive. While testing was performed using SPD film laminated in accordance with a particular method, any suitable SPD laminate may be used.

The SPD laminate and SPD film were sent to DSET Laboratories along with a power supply to drive the SPD film and laminate at 110V/60Hz, tempered glass (TG) and a heat rejecting glass (HRG), designated E366, from Cardinal Glass company of Eden Prarie, MN.

DSET laboratories performed Near-Normal Hemispherical Spectral Transmittance, Hemispherical Spectral Reflectance, Total Emittance and Shading Coefficient Calculations on the SPD film, SPD laminates, tempered glass and heat rejecting glass as detailed below. The resulting data was used to calculate the Winter U-value, Summer U-value, % Total Solar Energy Rejected, Relative Heat Gain, Shading Coefficient and Solar Heat Gain Coefficient for various configurations of the SPD film, SPD laminates, tempered glass and heat rejecting glass.

Optical Property Measurements

Hemispherical spectral transmittance and reflectance measurements were performed on the specimens in accordance with ASTM Standard Test Method E903. The measurements were performed with a PerkinElmer Lambda 950 Spectrophotometer utilizing an integrating sphere (Figure A1.4 of E903). Transmittance measurements were obtained in the solar spectrum from 2500nm to 300nm at an incident angle of 0°. The measurements are properly denoted as being 'near normal/hemispherical spectral transmittance'. Total reflectance measurements were obtained in the solar spectrum from 2500nm to 300nm at an incident angle of 8°C. The measurements employ a detector-baffled, wall-mounted integrating sphere that precludes the necessity of employing a reference standard except to define the instrument's 100% line. The measurements are properly denoted as being 'hemispherical spectral reflectance'. All spectral data are submitted herewith in the original. The data is also provided in excel files, wavelength by wavelength, every 10nm.

The spectral data were integrated against the ASTM E891-87 Air Mass 1.5 direct normal spectrum utilizing 109 weighted ordinates. Visible properties (380nm to 780nm) are weighted by the photopic response of the eye, which is taken as the Y tristimulus value for CIE 1931 Standard Observer.

Total Emittance Measurements

Near-Normal infrared reflectance measurements were performed in accordance with ASTM E408, Method A. A Gier Dunkle Instruments Infrared Reflectometer Model DB 100 was utilized for the measurements.

Inside the detector portion are two semi-cylindrical cavities. One of the cavities is heated by an electrical heater and the other stabilizes at approximately room temperature. Thus, the two cavities are maintained at different temperatures. As the cavities rotate, the sample is alternatively irradiated at 13 Hz. A vacuum thermocouple views the sample through an optical system that focuses through slits in the ends of the cavities. The detector receives energy emitted by the sample and energy reflected by the sample. Only the reflected energy contains an alternating component as the sample is alternatively irradiated by the hot and cold cavities. An amplifier is synchronized with the cavity rotation to pass only the desired alternating signal, which is then rectified and filtered. The zero and gain are set with standards of known emittance. The calibration is rechecked at several intervals during the measurement. The Gier Dunkle Infrared Reflectometer is calibrated using high and low emittance standards. The standards were calibrated at and obtained from the National Physical Laboratory in England. The emittance value for the glass standard equals 0.89. The emittance value for the mirror standard equals 0.01.

Near-Normal emittance for the specimens was calculated from Kirchhoff's Relationship where:

$$\rho + x + \tau = 1, x = \varepsilon$$

Assuming glass of this thickness has no transparency in the far IR, the Kirchhoff Law applies and reduces to

$$\rho + \varepsilon = 1 \text{ and } 1 - \rho = \varepsilon$$

Normal emittance values are converted to hemispherical emittance using equations 4 or 5, depending on material type, from National Fenestration Rating Council Test Method 301-93.

Shading Coefficient Calculations

The energy loss or gain through fenestration can be determined by knowledge of the U-value, the shading coefficient and site specific information such as window size and orientation, weather conditions, and solar irradiance data. Both the U-value and shading coefficient can be determined either by calculation or experimentally.

The shading coefficient and U-value data reported herein were calculated in accordance with the guidelines stated in the 1989 ASHRAE Fundamentals Handbook. The shading coefficient and summer UV-value calculations were determined under ASHRAE defined summer conditions where the outside temperature is 89°F (31.7°C), the room temperature is 75°F (23.9°C), the outdoor wind speed is 7.5 mph (3.3 m/s) and the incident solar radiation is 248 BTU[2]/hr (783 W/m[2]). The winter U-value calculations were determined under ASHRAE winter conditions of where the outside temperature is O°F (-17.8°C), the room temperature is 70°F (21.1°C) and the windward windspeed of 15 mph (6.7 m/s). Calculations data are for "center glass" conditions and were obtained from the Window 4.1 computer program used for analyzing window thermal performance.

OBSERVATIONS, DEVIATIONS, and WAIVERS

The infrared (3-55 microns) transmittance of the specimens was assumed to be zero.

Thermal conductivity of .900W/m/k for glass and .240W/m/k for the film was used in the shading coefficient calculations.

A power supply was submitted with the specimens. The SPD film and the SPD laminate were measured with the power supply in an unpowered state (UP) and a fully powered state(P).

The value reported for emittance is an average of four readings.

With all test methods, there typically is a level of uncertainty for the test data due to the acceptable operating tolerances of the instrumentation and variation caused by the test method. The estimated tolerances are expected to be less than plus or minus 2% for most materials tested to ASTM E903.

Table 1 and Table 2 show the optical property measurements of the various configurations.

RESULTS

Optical Property Data

Table 1

| Specimen code | Thickness (in.) | % Transmittance | | % Reflectance | | | |
|---|---|---|---|---|---|---|---|
| | | Visible | Solar | Visible Out | Visible In | Solar Out | Solar In |
| SPD film Unpowered | 0.013 | 0.6 | 29.6 | 6.8 | | 10.4 | |
| SPD film Powered | 0.013 | 57.7 | 69.4 | 6.8 | | 9.3 | |

(continued)

| Specimen code | Thickness (in.) | % Transmittance | | % Reflectance | | | |
|---|---|---|---|---|---|---|---|
| | | Visible | Solar | Visible Out | Visible In | Solar Out | Solar In |
| SPD Laminate Unpowered | 0.207 | 0.7 | 20.4 | 7.9 | | 9 | |
| SPD Laminate Powered | 0.207 | 54.1 | 55.7 | 7.9 | | 8.9 | |
| Heat Rejecting Glass | 0.225 | 68.2 | 26.8 | 5.6 | 8.7 | 54.5 | 37 |
| Tempered Glass | 0.194 | 93.3 | 92.5 | 6 | | 6.6 | |

Table 2

| Specimen code | Infrared Reflectance ($\rho$) Measured | Near-Normal Emittance ($\varepsilon$) Calculated | Hemispherical ($\varepsilon$) Emittance Calculated |
|---|---|---|---|
| SPD film Unpowered | 0.1 | 0.9 | 0.85 |
| SPD film Powered | 0.1 | 0.9 | 0.85 |
| SPD Laminate Unpowered | 0.11 | 0.89 | 0.84 |
| SPD Laminate Powered | 0.11 | 0.89 | 0.84 |
| Heat Rejecting Glass outside | 0.98 | 0.02 | 0.03 |
| Heat Rejecting Glass inside | 0.11 | 0.89 | 0.84 |
| Tempered Glass | 0.11 | 0.89 | 0.84 |

Table 3

| Specimen code | Winter U-value (Btu/hr-ft $^{20}$F) | Summer U-value (Btu/hr-ft $^{20}$F) | % Total Solar Energy Rejected | Relative Heat Gain (Btu/hr-ft$^2$) | Shading Coefficient | Solar Heat Gain Coefficient | % Visible Transmittance |
|---|---|---|---|---|---|---|---|
| SPD film Unpowered (UP) | 1.13 | 1.15 | 53 | 125 | 0.55 | 0.47 | 1 |
| SPD film Powered (P) | 1.13 | 1.08 | 25 | 190 | 0.87 | 0.75 | 58 |
| SPD Laminate Unpowered (UP) | 1.09 | 1.13 | 59 | 110 | 0.47 | 0.41 | 0.70 |
| SPD Laminate Powered (P) | 1.09 | 1.07 | 35 | 167 | 0.76 | 0.65 | 54 |
| Heat Rejecting Glass (HRG) | 1.06 | 0.96 | 67 | 90 | 0.38 | 0.33 | 68 |

(continued)

| Specimen code | Winter U-value (Btu/hr-ft $^2$F) | Summer U-value (Btu/hr-ft $^2$F) | % Total Solar Energy Rejected | Relative Heat Gain (Btu/hr-ft$^2$) | Shading Coefficient | Solar Heat Gain Coefficient | % Visible Transmittance |
|---|---|---|---|---|---|---|---|
| Tempered Glass (TG) | 1.1 | 0.99 | 7 | 230 | 1.08 | 0.93 | 93 |
| HRG/.5" air gap/SPD film UP/.5" air gap/TG | 0.31 | 0.4 | 87 | 37 | 0.16 | 0.13 | 0 |
| HRG/.5" air gap/SPD film P/.5" air gap/TG | 0.31 | 0.37 | 79 | 55 | 0.25 | 0.21 | 37 |
| HRG/.5" Ar gap/SPD film UP/.5" Ar gap/TG | 0.29 | 0.38 | 87 | 36 | 0.15 | 0.13 | 0 |
| HRG/.5" Ar gap/SPD film P/.5" Ar gap/TG | 0.29 | 0.35 | 79 | 54 | 0.25 | 0.21 | 37 |
| HRG/.5" air gap/SPD lam. UP | 0.48 | 0.56 | 81 | 52 | 0.22 | 0.19 | 0 |
| HRG/.5" air gap/SPD lam. P | 0.48 | 0.54 | 76 | 64 | 0.28 | 0.24 | 37 |
| HRG/.5" Ar gap/SPD lam. UP | 0.45 | 0.53 | 81 | 53 | 0.23 | 0.19 | 0 |
| HRG/.5" Ar gap/SPD lam. P | 0.45 | 0.51 | 76 | 63 | 0.28 | 0.24 | 37 |
| SPD lam. UP/.5" air gap/HRG | 0.29 | 0.31 | 93 | 21 | 0.08 | 0.07 | 0 |
| SPD lam. P/.5" air gap/HRG | 0.29 | 0.3 | 75 | 63 | 0.29 | 0.25 | 37 |
| SPD lam. UP/.5" Ar gap/HRG | 0.23 | 0.25 | 94 | 18 | 0.07 | 0.06 | 0 |
| SPD lam. P/.5" Ar gap/HRG | 0.23 | 0.23 | 75 | 61 | 0.29 | 0.25 | 37 |

(continued)

| Specimen code | Winter U-value (Btu/hr-ft $^2\,^0$F) | Summer U-value (Btu/hr-ft $^{20}$F) | % Total Solar Energy Rejected | Relative Heat Gain (Btu/hr-ft$^2$) | Shading Coefficient | Solar Heat Gain Coefficient | % Visible Transmittance |
|---|---|---|---|---|---|---|---|
| SPD lam. UP/.5" air gap/TG | 0.49 | 0.58 | 71 | 77 | .34 | 0.57 | 0 |
| SPD lam. P/.5" air gap/TG | 0.49 | 0.55 | 43 | 141 | 0.67 | .29 | 51 |
| SPD lam. UP/.5" Ar gap/TG | 0.46 | 0.55 | 71 | 75 | .34 | | 0 |
| SPD lam. P/.5" Ar gap/TG | 0.46 | 0.52 | 43 | 140 | 0.66 | 0 .29 | 51 |

Referring to Table 3, the data shows that none of the SPD film alone, the SPD laminate 12 alone or the heat rejecting glass HRG alone satisfies the fenestration energy efficient requirement of U-Value <0.3, SHGC <0.3. The data in Table 3 also shows that the SPD is preferably incorporated into an insulating glass unit (IGU) in order to satisfy the fenestration energy efficient requirement of U-Value <0.3, SHGC <0.3. When the SPD laminate 12 and the heat rejecting glass 14 are combined in the IGU configuration, SPD laminate/.5" Argon gap/heat rejecting glass, the U-Value and SHGC are both < 0.3 with the SPD laminate in either the unpowered or powered state. The importance of the configuration is underscored by the fact that the opposite of the above IGU mentioned configuration, namely, heat rejecting glass/.5" Argon gap/SPD laminate gave U-Values well above 0.3 with the SPD laminate in both the unpowered and powered state.

Additional measurements and calculations were performed by DSET Laboratories on SPD laminates where the heat rejecting glass was incorporated into the SPD laminate. For SPD lam# 1, the configuration of the laminate was tempered glass/HMA/SPD film/HMA/heat rejecting glass with the conductive side of the heat rejecting glass adjacent to the SPD film. For SPD lam#2, the configuration of the laminate was tempered glass/HMA/SPD film/HMA/heat rejecting glass with the conductive side of the heat rejecting glass opposite to the SPD film. Table 4 below gives energy data for SPD laminates lam#1 and lam#2, as well as, energy data for various IGU configurations comprising SPD laminates lam#1 and lam#2.

Table 4

| Specimen code | Winter U-value (Btu/hr-ft $^2$ F) | Summer U-value (Btu/hr-ft $^2$ F) | % Total Solar Energy Rejected | Relative Heat Gain (Btu/hr-ft$^2$) | Shading Coefficient | Solar Heat Gain Coefficient | % Visible Transmittance |
|---|---|---|---|---|---|---|---|
| SPD lam#1 (TG/SPD/ HRG coating interior)UP | 1.06 | 1.09 | 83 | 55 | 0.2 | 0.17 | 0 |
| SPD lam#1 (TG/SPD/ HRG coating interior)P | 1.06 | 1.07 | 74 | 76 | 0.31 | 0.26 | 34 |
| SPD lam#1 (HRG coating interior/SPD/TG)UP | 1.06 | 1.11 | 78 | 67 | 0.26 | 0.22 | 0 |
| SPD lam#1 (HRG coating interior/SPD/TG)P | 1.06 | 10.8 | 72 | 79 | 0.32 | 0.28 | 34 |
| SPD lam#2 (TG/SPD/ HRG coating exterior)UP | 0.64 | 0.63 | 87 | 40 | 0.15 | 0.13 | 0 |
| SPD lam#2 (TG/SPD/ HRG coating exterior)P | 0.64 | 0.59 | 75 | 66 | 0.29 | 0.25 | 41 |
| SPD lam#2 (HRG coating exterior/SPD/TG)UP | 1.03 | 0.98 | 85 | 50 | 0.18 | 0.15 | 0 |
| SPD lam#2 (HRG coating exterior/SPD/TG)P | 1.03 | 0.96 | 74 | 73 | 0.3 | 0.26 | 41 |
| SPD lam#2 (TG/SPD/ HRG coating exterior) UP/.5" Ar gap/TG | 0.23 | 0.26 | 94 | 17 | 0.07 | 0.06 | 0 |
| SPD lam#2 (TG/SPD/ HRG coating exterior)P/.5" Ar gap/TG | 0.23 | 0.24 | 81 | 47 | 0.22 | 0.19 | 39 |
| TG/.5" Ar gap/SPD lam#2 (TG/SPD/ HRG coating exterior) UP | 0.23 | 0.47 | 66 | 86 | 0.4 | 0.34 | 0 |
| TG/.5" Ar gap/SPD lam#2 (TG/SPD/ HRG coating exterior)P | 0.33 | 0.44 | 61 | 97 | 0.45 | 0.39 | 39 |
| HRG/.5" Ar gap/SPD lam#2 (TG/SPD/ HRG coating exterior) UP | 0.32 | 0.39 | 86 | 38 | 0.16 | 0.14 | 0 |
| HRG/.5" Ar gap/SPD lam#2 (TG/SPD/ HRG coating exterior)P | 0.32 | 0.37 | 81 | 48 | 0.22 | 0.19 | 28 |

(continued)

| Specimen code | Winter U-value (Btu/hr-ft $^2$ °F) | Summer U-value (Btu/hr-ft $^2$ °F) | % Total Solar Energy Rejected | Relative Heat Gain (Btu/hr-ft $^2$) | Shading Coefficient | Solar Heat Gain Coefficient | % Visible Transmittance |
|---|---|---|---|---|---|---|---|
| SPD lam#2 (TG/SPD/ HRG coating exterior) UP/.5" Ar gap/HRG | 0.23 | 0.25 | 95 | 16 | 0.06 | 0.05 | 0 |
| SPD lam#2 (TG/SPD/ HRG coating exterior) P/.5" Ar gap/HRG | 0.23 | 0.23 | 83 | 43 | 0.2 | 0.17 | 28 |

The data in Table 4 shows that, in spite of the inclusion of the heat rejecting glass HRG as part of the SPD laminate, for example, SPD lam#1 (TG/SPD/ HRG coating interior)UP, the U-values are significantly > 0.3 regardless of the orientation of the heat rejecting glass in the SPD laminate.

However, when the SPD laminate #2 and tempered glass are combined in the IGU configuration, SPD lam#2 (TG/SPD/ HRG coating exterior)/.5" Ar gap/TG, the U-Value and SHGC are both < 0.3 with the SPD laminate in either the unpowered or powered state. That is, where only a single HRG pane is used in the IGU 10, high efficiency is achieved.

Interestingly, creating an IGU with two panes of heat rejecting glass with the configuration, HRG/.5" Ar gap/SPD lam#2 (TG/SPD/ HRG coating exterior), did not result in U-Values <0.3 in either the unpowered or powered state. Although, reversing this configuration to, SPD lam#2 (TG/SPD/ HRG coating exterior)/.5" Ar gap/HRG resulted in U-Values and an SHGC < 0.3, the visible transmittance in the powered state was reduced to 28%. Thus, this configuration, while providing sufficient energy efficiency provides undesirably reduced transmittance when compared to the 39% transmittance provided by the IGU configuration of SPD lam#2(TG/SPD/HRG coating exterior)/.5" Ar gap/TG. While not wishing to be bound to this explanation, the use of multiple sheets of heat rejecting glass may lead to IR heat being reflected in both directions which allows more heat to pass through the IGU.

This invention makes possible fenestrations that include SPD technology which are extraordinarily energy efficient and can variably control the transmission of visible light.

Although the present invention has been described in relation to particular embodiments thereof, many other variations and modifications and other uses will become apparent to those skilled in the art.

## Claims

1.  An insulated glass unit (10) to be used in a fenestration product of a building, the insulated glass unit comprising:

    a frame (16);
    a suspended particle device, SPD, laminate (12) mounted in the frame on an outward facing side of the insulated glass unit; and
    a pane of glass (14) mounted in the frame adjacent to the laminate such that a space (18) is formed between the laminate and the pane of glass;
    wherein the space is filled with argon,
    wherein the SPD laminate comprises:

       a first substantially transparent panel;
       a first adhesive layer applied to an inner surface of the first transparent panel;
       an SPD film with a first surface adhered to the first substantially transparent panel via the first adhesive layer; **characterised in that** the SPD laminate further comprises a second adhesive layer applied to a second surface of the SPD film opposite the first surface; and a second substantially transparent panel adhered to the SPD film via the second adhesive layer to face the argon filled space,
       wherein the first substantially transparent panel is a pane of tempered glass and the second substantially transparent panel is a pane of heat rejecting glass,
       wherein a heat rejecting coating on the pane of the heat rejecting glass is positioned on the pane of heat rejecting glass to face away from the SPD film,
       wherein said insulated glass unit has a winter U-value, which represents the rate of non-solar heat loss or gain through a material, of <1.70 W/(m$^2$K) and a solar heat gain coefficient, SHGC, which represents the fraction of solar radiation admitted through a window, both directly transmitted and absorbed, and subsequently released inward, of <0.30, wherein the winter U-value is determined under the following conditions: outside temperature of -17.8°C, room temperature of 21.1 °C, windspeed of 6.7 m/s and no solar load.

2.  A method of making an insulated glass unit (10) to be used in a fenestration product of a building, the method comprising:

    providing a (16);
    providing a suspended particle device, SPD, laminate (12);
    providing a pane of glass (14);
    positioning the SPD laminate in the frame on an outward facing side of the insulated glass unit;
    positioning the pane of glass adjacent to the SPD laminate on an inner side of the SPD laminate such that a gap (18) is formed between the SPD laminate and the pane of glass; and
    filling the gap with argon, wherein the step of providing an SPD laminate further comprises:

providing a first substantially transparent panel;
providing a first adhesive layer;
applying the first adhesive layer to an inner surface of the first transparent panel;
providing an SPD film;
adhering a first surface of the SPD film to the first substantially transparent panel via the first adhesive layer;
providing a second adhesive layer;
applying the second adhesive layer to a second surface of the SPD film opposite the first surface;
providing a second substantially transparent panel; and

adhering the second substantially transparent panel to the SPD film via the second adhesive layer to face the argon filled gap,
wherein the step of providing the first substantially transparent panel further comprises providing a pane of tempered glass and the step of providing the second substantially transparent panel comprises providing a pane of heat rejecting glass,
wherein the step of adhering the second
substantially transparent panel to the SPD film further comprises positioning a heat rejecting coating on the pane of the heat rejecting glass to face away from the SPD film, wherein said insulated glass unit has a winter U-value, which represents the rate of non-solar heat loss or gain through a material, of < 1.70 W/(m$^2$K) and a solar heat gain coefficient, SHGC, which represents the fraction of solar radiation admitted through a window, both directly transmitted and absorbed, and subsequently released inward, of < 0.30, wherein the winter U-value is determined under the following conditions: outside temperature of -17.8°C, room temperature of 21.1 °C, windspeed of 6.7 m/s and no solar load.

**3.** A fenestration product comprising an insulated glass unit according to claim 1.

**Patentansprüche**

**1.** Isolierglaseinrichtung (10) zur Verwendung in einem Gebäude-Befensterungsprodukt, wobei die Isolierglaseinrichtung Folgendes umfasst:

einen Rahmen (16);
ein Suspensionspartikelvorrichtung (suspended particle device, SPD)-Laminat (12), das im Rahmen an einer Außenseite der Isolierglaseinrichtung angebracht ist; und
eine Glasscheibe (14), die im Rahmen angrenzend zum Laminat so angebracht ist, dass ein Zwischenraum (18) zwischen dem Laminat und der Glasscheibe ausgebildet ist;
wobei der Zwischenraum mit Argon gefüllt ist;
wobei das SPD-Laminat Folgendes umfasst:

eine erste, im Wesentlichen durchsichtige Platte;
eine erste Klebeschicht, die auf eine innere Oberfläche der ersten durchsichtigen Platte aufgebracht ist;
einen SPD-Film mit einer ersten Oberfläche, die mittels der ersten Klebeschicht an der ersten, im Wesentlichen durchsichtigen Platte haftet;

**dadurch gekennzeichnet, dass** das SPD-Laminat ferner Folgendes umfasst:

eine zweite Klebeschicht, die auf einer zweiten Oberfläche des SPD-Films gegenüber der ersten Oberfläche aufgebracht ist; und
eine zweite, im Wesentlichen durchsichtige Platte, die am SPD-Film mittels der zweiten Klebeschicht haftet und dem mit Argon gefüllten Zwischenraum zugewandt ist;

wobei es sich bei der ersten, im Wesentlichen durchsichtigen Platte um eine Scheibe aus Temperglas handelt und es sich bei der zweiten im Wesentlichen durchsichtigen Platte um eine Scheibe aus wärmeabweisendem Glas handelt;
wobei ein wärmeabweisender Überzug auf der Scheibe aus wärmeabweisendem Glas so auf der Scheibe aus wärmeabweisendem Glas angeordnet ist, dass er vom SPD-Film abgewandt ist;
wobei die Isolierglaseinrichtung einen Winter-U-Wert, der das Maß des nicht-solaren Wärmeverlustes oder Wärmezuwachses beim Durchgang durch ein Material darstellt, von < 1,70 W/(m$^2$K) aufweist und einen solaren Wärmegewinnkoeffizienten (SHGC-Wert), der den Anteil der solaren Strahlung, der durch ein Fenster aufgenommen wird und zwar sowohl direkt durchgelassen als auch absorbiert und anschließend nach innen freigesetzt wird, darstellt, von < 0,30 aufweist, wobei der Winter-U-Wert unter folgenden Bedingungen bestimmt wird: Außentemperatur -17,8°C, Raumtemperatur 21,1°C, Windgeschwindigkeit 6,7 m/s und keine solare Last.

2. Verfahren zur Herstellung einer Isolierglaseinrichtung (10) zur Verwendung in einem Gebäude-Befensterungsprodukt, wobei das Verfahren Folgendes umfasst:

Bereitstellen eines Rahmens (16);
Bereitstellen eines Suspensionspartikelvorrichtung (suspended particle device, SPD)-Laminats (12);
Bereitstellen einer Glasscheibe (14);
Positionieren des SPD-Laminats im Rahmen an einer Außenseite der Isolierglaseinrichtung;
Positionieren der an das SPD-Laminat angrenzenden Glasscheibe auf einer Innenseite des SPD-Laminats in der Weise, dass ein Zwischenraum (18) zwischen dem SPD-Laminat und der Glasscheibe ausgebildet wird; und
Füllen des Zwischenraums mit Argon;
wobei die Stufe der Bereitstellung des SPD-Laminats ferner Folgendes umfasst:

Bereitstellen einer ersten, im Wesentlichen durchsichtigen Platte;
Bereitstellen einer ersten Klebeschicht;
Aufbringen der ersten Klebeschicht auf eine innere Oberfläche der ersten durchsichtigen Platte;
Bereitstellen eines SPD-Films;
Aufkleben einer ersten Oberfläche des SPD-Films auf die erste, im Wesentlichen durchsichtige Platte mittels der ersten Klebeschicht;
Bereitstellen einer zweiten Klebeschicht;
Aufbringen der zweiten Klebeschicht auf eine zweite Oberfläche des SPD-Films gegenüber der ersten Oberfläche;
Bereitstellen einer zweiten, im Wesentlichen durchsichtigen Platte; und
Aufkleben der zweiten, im Wesentlichen durchsichtigen Platte auf den SPD-Film gegenüber der ersten Oberfläche mittels der zweiten Klebeschicht in der Weise, dass sie dem mit Argon gefüllten Zwischenraum zugewandt ist;

wobei die Stufe der Bereitstellung der ersten, im Wesentlichen durchsichtigen Platte ferner die Bereitstellung einer Scheibe aus Temperglas umfasst und die Stufe der Bereitstellung der zweiten, im Wesentlichen durchsichtigen Platte die Bereitstellung einer Scheibe aus wärmeabweisendem Glas umfasst
wobei die Stufe des Aufklebens der zweiten, im Wesentlichen durchsichtigen Platte auf den SPD-Film ferner das Positionieren eines wärmeabweisenden Überzugs auf der Scheibe aus wärmeabweisendem Glas in der Weise umfasst, dass er vom SPD-Film abgewandt ist;
wobei die Isolierglaseinrichtung einen Winter-U-Wert, der das Maß des nicht-solaren Wärmeverlustes oder Wärmezuwachses beim Durchgang durch ein Material darstellt, von < 1,70 W/(m²K) aufweist und einen solaren Wärmegewinnkoeffizienten (SHGC-Wert), der den Anteil der solaren Strahlung, der durch ein Fenster aufgenommen wird und zwar sowohl direkt durchgelassen als auch absorbiert und anschließend nach innen freigesetzt wird, darstellt, von < 0,30 aufweist, wobei der Winter-U-Wert unter folgenden Bedingungen bestimmt wird: Außentemperatur -17,8°C, Raumtemperatur 21,1°C, Windgeschwindigkeit 6,7 m/s und keine solare Last.

3. Befensterungsprodukt, umfassend eine Isolierglaseinrichtung nach Anspruch 1.

**Revendications**

1. Une unité de vitrage isolant (10) pour être utilisée dans un produit de fenêtrage d'un bâtiment, l'unité de vitrage isolant comprenant :

un cadre (16) ;
un dispositif à particules en suspension, SPD, stratifié (12), monté dans le cadre sur un côté orienté vers l'extérieur de l'unité de vitrage isolant ; et
une vitre (14) montée dans le cadre en position adjacente au stratifié de sorte qu'un espace (18) soit formé entre le stratifié et la vitre ;
dans lequel l'espace est rempli d'argon,

dans lequel le stratifié SPD comprend :

un premier panneau sensiblement transparent ;
une première couche adhésive appliquée sur une surface interne du premier panneau transparent ;
un film SPD avec une première surface collée au premier panneau sensiblement transparent par l'intermédiaire de la première couche adhésive ;
**caractérisé en ce que** le stratifié SPD comprend en outre une deuxième couche adhésive appliquée sur une deuxième surface du film SPD opposée à la première surface ; et
un deuxième panneau sensiblement transparent collé au film SPD par l'intermédiaire de la deuxième couche adhésive de façon à faire face à l'espace rempli d'argon,

dans laquelle le premier panneau sensiblement transparent est une vitre de verre trempé et le deuxième panneau sensiblement transparent est une vitre de verre rejetant la chaleur,
dans laquelle un revêtement rejetant la chaleur sur la vitre de verre rejetant la chaleur est positionné sur la vitre de verre rejetant la chaleur de façon à être à l'opposé du film SPD,
dans laquelle ladite unité de vitrage isolant a une valeur U hivernale, qui représente le taux de perte ou de gain de chaleur non solaire à travers un matériau, < 1,70 W/(m$^2$K) et un coefficient de gain de chaleur solaire, SHGC, qui représente la fraction de rayonnement solaire admise à travers une fenêtre, à la fois directement transmise et absorbée, puis relâchée vers l'intérieur, < 0,30, la valeur U hivernale étant déterminée dans les conditions suivantes : température extérieure de -17,8 °C, température ambiante de 21,1 °C, vitesse du vent de 6,7 m/s et absence de charge solaire.

2. Une méthode de fabrication d'une unité de vitrage isolant (10) pour être utilisée dans un produit de fenêtrage d'un bâtiment, le procédé comprenant :

fournir un cadre (16) ;
fournir un dispositif à particules en suspension, SPD, stratifié de (12) ;
fournir une vitre (14) ;
positionner le stratifié SPD dans le cadre sur un côté tourné vers l'extérieur de l'unité de verre isolé ;
positionner la vitre de façon adjacente au stratifié SPD sur un côté interne du stratifié SPD de sorte qu'un espace (18) soit formé entre le stratifié SPD et la vitre ; et
le remplissage de l'espace avec de l'argon,
dans lequel l'étape de fournir un stratifié SPD comprend en outre :

fournir un premier panneau sensiblement transparent ;
fournir une première couche adhésive ;
appliquer une première couche adhésive sur une surface interne du premier panneau transparent ;
fournir un film SPD ;
coller une première surface du film SPD au premier panneau sensiblement transparent par l'intermédiaire de la première couche adhésive ;
fournir une deuxième couche adhésive ;
appliquer la deuxième couche adhésive sur une deuxième surface du film SPD opposée à la première surface ;
fournir un deuxième panneau sensiblement transparent ; et
coller le deuxième panneau sensiblement transparent au film SPD par l'intermédiaire de la deuxième couche adhésive pour faire face à l'espace rempli d'argon,

dans lequel l'étape de fourniture du premier panneau sensiblement transparent comprend en outre la fourniture d'une vitre de verre trempé et l'étape de fourniture du deuxième panneau sensiblement transparent comprend la fourniture d'une vitre de verre rejetant la chaleur,
dans lequel l'étape de collage du deuxième panneau sensiblement transparent au film SPD comprend en outre le positionnement d'un revêtement rejetant la chaleur sur la vitre de verre rejetant la chaleur à l'opposé du film SPD, ladite unité de vitrage isolant ayant une valeur U hivernale, qui représente le taux de perte ou de gain de chaleur non solaire à travers un matériau, < 1,70 W/(m$^2$K) et un coefficient de gain de chaleur solaire, SHGC, qui représente la fraction de rayonnement solaire admise à travers une fenêtre, à la fois directement transmise et absorbée, et ensuite relâchée vers l'intérieur, < 0,30, où la valeur U hivernale est déterminée dans les conditions suivantes : température extérieure de -17,8 °C, température ambiante de 21,1 °C, vitesse du vent de 6,7 m/s et absence de charge solaire.

3. Produit de fenêtrage comprenant une unité de vitrage isolant selon la revendication 1.

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61232294 A
- US 85128510 A
- US 5409734 A
- US 5463491 A
- US 5463492 A
- US 898303 A
- US 6301040 B
- US 6416827 B
- US 6900923 B2
- US 4247175 A
- US 4407565 A
- US 4772103 A
- US 5461506 A
- US 6936193 B2
- WO 2007122428 A1
- US 6429961 B1
- US 7361252 B2